Europäisches Patentamt

(19) European Patent Office

Office européen des brevets

(11) Veröffentlichungsnummer: **0 010 645**
**B1**

(12) **EUROPÄISCHE PATENTSCHRIFT**

(45) Veröffentlichungstag der Patentschrift:
23.06.82

(21) Anmeldenummer: 79103829.2

(22) Anmeldetag: 06.10.79

(51) Int. Cl.³: **B 29 D 27/00,** A 63 B 45/00,
A 63 B 39/00

(54) Verfahren zur Herstellung von Tennisbällen sowie mit diesem Verfahren hergestellter Tennisball.

(30) Priorität: 11.10.78 DE 2844193

(43) Veröffentlichungstag der Anmeldung:
14.05.80 Patentblatt 80/10

(45) Bekanntmachung des Hinweises auf die Patenterteilung:
23.06.82 Patentblatt 82/25

(84) Benannte Vertragsstaaten:
AT BE CH FR GB IT NL SE

(56) Entgegenhaltungen:
DD-A-110 209
DE-A1-2 509 776
DE-A1-2 626 248
DE-A1-2 634 224
DE-B-1 103 005
DE-B-1 925 567
DE-U-6 926 712
DE-U-7 608 192

(73) Patentinhaber: METZELER SCHAUM GMBH,
Donaustrasse 51, D-8940 Memmingen (DE)

(72) Erfinder: Bokelmann, Horst,
Richard-Kirchner-Strasse 24, D-3590 Bad Wildungen
(DE)
Erfinder: Patzelt, Heinz Wolfgang, Dr. rer. nat., Buxacher
Strasse 73, D-8940 Memmingen (DE)

(74) Vertreter: Michelis, Theodor, Dipl.-Ing.,
Westendstrasse 131, D-8000 München 2 (DE)

Verfahren zur Herstellung von Tennisbällen sowie mit diesem Verfahren hergestellter Tennisball

Die Erfindung betrifft ein Verfahren zur Herstellung von Tennisbällen aus Schaumstoff sowie einen mit diesem Verfahren hergestellten Tennisball.

Aus der DE-A1-2 509 776 ist eine Volkssportserie bekannt, bei der weichelastische, in Formen hergestellte Bälle auf Latex- oder Synthetik-Basis verwendet werden. Um die Geschwindigkeit dieses Balls zu erhöhen, sollte seine Oberfläche nicht offenporös sein.

Die Herstellung solcher Bälle in Formen ist jedoch äußerst aufwendig, so daß ihr Preis — auch bei Massenfertigung — sehr hoch ist.

Aus dem DE-U-7 608 192 ist ein Sportball, insbesondere Volleyball, aus Schaumstoff bekannt, der offensichtlich ebenfalls in Formen hergestellt wird. Auch hierbei ist also die Fertigung sehr aufwendig.

Es ist darüber hinaus bekannt, einen Spielball, insbesondere einen Tennisball, nicht mit unter Überdruck stehendem Gas, sondern mit einem Schaumstoffkern zu füllen (DE-B-1 078 914). Auch dieses Verfahren ist also äußerst aufwendig. Darüber hinaus entsprechen diese Tennisbälle exakt den üblichen Bällen, so daß sie beispielsweise für das Spielen am Strand nicht geeignet sind.

Neben der bereits oben erwähnten, äußerst aufwendigen Fertigung in Formen haben die herkömmlichen, aus massivem Schaumstoff bestehenden, für das Training des Tennisspiels geeigneten Bälle noch den Nachteil, daß ihre Elastizität äußerst gering und wesentlich kleiner als die der üblichen Tennisbälle ist. Dies bedeutet in der Praxis, daß solche Tennisbälle aus massivem Schaumstoff beim Aufprall auf den Boden nicht so hoch springen wie die üblichen Tennisbälle. Gewöhnt man sich an diese schlechten Sprungeigenschaften eines Tennisballs aus Schaumstoff, so ist die Umstellung auf herkömmliche, sehr viel besser abspringende Tennisbälle äußerst schwierig. Aus diesem Grunde sind Tennisbälle aus massivem Schaumstoff bisher nur in äußerst begrenztem Umfang für das Training des Tennisspiels geeignet.

Der Erfindung liegt die Aufgabe zugrunde, ein Verfahren zur Herstellung von Tennisbällen aus Schaumstoffen zu schaffen, bei dem die oben erwähnten Nachteile nicht auftreten.

Insbesondere soll ein Verfahren vorgeschlagen werden, das sehr viel einfacher und damit kostengünstiger als die übliche Herstellung in Formen ist und darüber hinaus zu Tennisbällen führt, deren Sprungvermögen praktisch identisch mit dem Sprungvermögen herkömmlicher Tennisbälle mit Filzoberfläche, Gummiwand und mit einer Füllung aus unter Überdruck stehendem Gas ist.

Dies wird erfindungsgemäß dadurch erreicht, daß aus einem Schaumstoffblock, vorzugsweise aus Kaltschaum, mit einer Raumdichte von mindestens 130 kg/m³, insbesondere 160 kg/m³, eine Kugel in der Größe eines Tennisballs ausgefräst wird, und daß diese Kugel gewalkt wird.

Die mit der Erfindung erzielten Vorteile beruhen insbesondere darauf, daß als Ausgangsmaterial ein Schaumstoffblock verwendet wird, dessen Raumdichte etwa 160 kg/m³ beträgt. Versuche haben ergeben, daß aus einem solchen Schaumstoffblock ausgefräste und anschließend gewalkte Kugeln eine Rückprallelastizität von ca. 1,35 m nach einem freien Fall aus einer Höhe von 2,40 m haben.

Diese Rückprallelastizität entspricht exakt dem Wert für herkömmliche Tennisbälle, so daß diese Schaumstoffkugel in bezug auf das Sprungvermögen die gleiche Eigenschaft wie ein üblicher Tennisball hat.

Der wesentliche Unterschied zwischen einem solchen Tennisball aus massivem Schaumstoff und einem herkömmlichen Tennisball besteht nur noch in der geringeren Fluggeschwindigkeit. Darin wird jedoch gerade ein für das Training mit einem solchen Ball wesentlicher Vorteil gesehen, da mit einem solchen, langsamer fliegenden Ball bestimmte Schläge besser geübt werden können. Wesentlich ist nur, daß das Sprungvermögen dem eines üblichen Tennisballs entspricht, so daß die Umstellung auf das Spielen mit den üblichen Tennisbällen nicht so schwierig wird.

Als Schaumstoff wird zweckmäßigerweise Polyurethan, und zwar vorzugsweise auf Polyäther-Basis, verwendet.

Das Ausfräsen der Kugel aus dem Schaumstoffblock kann beispielsweise mittels des Verfahrens durchgeführt werden, wie es in der DE-A-2 634 224 beschrieben wird.

Um die Poren der Schaumstoffkugel aufzubrechen, kann sie zwischen zwei sich relativ zueinander bewegenden Förderbändern transportiert werden, deren Abstand höchstens etwa der Hälfte des Durchmessers der Kugel entspricht. Bei dieser Bewegung zwischen den Förderbändern wird also die Kugel so stark gewalkt, daß sich eine ausreichende Öffnung der Poren ergibt.

Um auch visuell eine Anpassung dieses Tennisballs aus Schaumstoff an einen üblichen Tennisball zu erreichen, kann die Schaumstoffkugel mit einer geschlossenen Konturlinie versehen werden, die der Rille zwischen den zwei Filzstücken auf der Oberfläche eines herkömmlichen Tennisballs entspricht.

Zweckmäßigerweise wird diese Konturlinie eingebrannt, indem die ausgefräste und gewalkte Kugel an einer geschlossenen, etwa ovalen erhitzten Drahtschleife vorbeigerollt wird. Die Oberflächenbereiche der Kugel, die mit der Drahtschleife in Berührung kommen, schmelzen an, wodurch die Konturlinie eingebrannt wird.

Die Erfindung wird im folgenden an Hand eines Ausführungsbeispiels unter Bezugnahme auf die beiliegenden, schematischen Zeichnungen näher erläutert. Es zeigt

Fig. 1 eine Seitenansicht eines Tennisballs aus Schaumstoff,

Fig. 2 eine Seitenansicht der Walkvorrichtung und

Fig. 3 eine perspektivische Ansicht der Vorrichtung für das Einbrennen der Konturlinie.

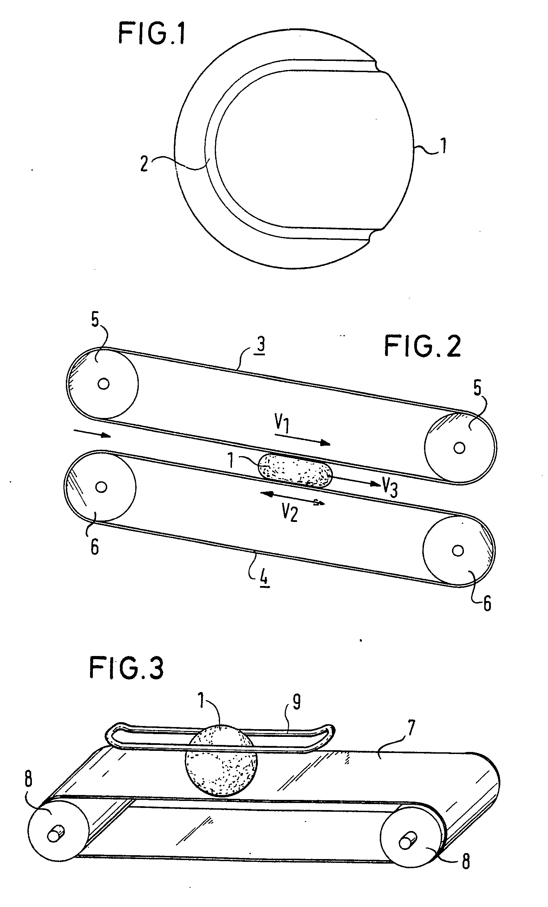

In Fig. 1 ist ein Tennisball 1 dargestellt, der aus einem Schaumstoffkörper aus Polyurethan auf Polyäther- bzw. Polyester-Basis besteht. In die Oberfläche des Tennisballs 1 ist eine in sich geschlossene Konturlinie 2 eingebrannt, die genau der Trennungslinie zwischen den aufgeklebten Filzstreifen bei herkömmlichen Tennisbällen entspricht.

Ein solcher Tennisball 1 aus Schaumstoff wird auf folgende Weise hergestellt:

Zunächst wird mit dem Verfahren, wie es aus der DE-A-2 634 224 bekannt ist und deshalb nicht näher erläutert werden soll, aus einen Block aus Polyurethan-Kaltschaum eine Kugel mit den Abmessungen eines Tennisballs ausgestanzt. Dabei wird von einem Polyurethanschaumstoffblock ausgegangen, desen Raumdichte mindestens etwa 130 kg/m$^3$ beträgt, da eine Kugel aus diesem Material etwa die gleiche Rückprallelastizität wie ein herkömmlicher Tennisball hat.

Diese ausgestanzte Kugel 1 wird anschließend zwischen die beiden, in Fig. 2 dargestellten, endlosen Förderbänder 3 und 4 eingeführt, die jeweils über 2 Rollen 5 bzw. 6 laufen. Dabei entspricht der Abstand zwischen den beiden, einander zugewandten Oberflächen der Förderbänder 3 und 4 etwa höchstens der Hälfte des Durchmessers der nicht zusammengedrückten Kugel, so daß die Kugel 1 bei ihrer Bewegung zwischen den beiden Förderbändern die aus Fig. 2 zu erkennende, langgestreckte Form erhält. Die für den Walkvorgang erforderliche Reibung wird dadurch erreicht, daß sich die Förderbänder 3 und 4 relativ zueinander bewegen, d. h. mit unterschiedlicher Geschwindigkeit in der gleichen oder entgegengesetzten Richtung, wie das mit den Pfeilen $V_1$ und $V_2$ angegeben ist. Dadurch brechen die Poren des Schaumstoffs auf, wodurch die Rückprallelastizität erhöht wird.

Von den beiden Förderbändern 3 und 4 wird die Schaumstoffkugel 1 in Richtung des Pfeils mit der Geschwindigkeit $V_3$ ausgegeben und auf ein weiteres Förderband 7 abgelegt, das ebenfalls über Rollen 8 läuft. Von diesem Förderband wird die Schaumstoffkugel 1 unter eine geschlossene Drahtschleife 9 geführt, die in Draufsicht etwa Ovalform hat und an ihren beiden Enden etwas nach oben gewölbt ist. Diese Drahtschleife 9 ist von oben durch nicht gezeigte Mittel gehaltert.

Außerdem wird dieser Drahtschleife 9 Strom zugeführt, so daß sie auf eine Temperatur von etwa 350°C erwärmt ist.

Wenn die Kugel 1 gemäß der Darstellung in Fig. 3 von links durch das Förderband 7 antransportiert und in den Raum zwischen der Drahtschleife 9 und das Förderband 7 eingeführt wird, kommt ihre Oberfläche zunächst mit dem gebogenen, linken Endbereich der Drahtschleife 9 in Berührung und rollt dann an der Drahtschleife 9 ab, bis sie schließlich von dem rechten Endbereich der Drahtschleife 9 wieder ausgegeben wird.

An den Berührungspunkten zwischen der Oberfläche der Kugel 1 und der Drahtschleife 9 wird der Schaumstoff etwas angeschmolzen, wodurch sich die geschlossene Konturlinie 2 (siehe Fig. 1) ergibt.

Durch entsprechende Abstimmung von Temperatur und Abrollgeschwindigkeit kann die Form dieser Konturlinie noch optimiert werden. Beispielsweise eine Temperatur von 350°C der Drahtschleife 9 und eine Abrollgeschwindigkeit von $V_3 = 10$ cm/sek hat sich als zweckmäßig herausgestellt.

Ein solcher Ball hat eine frappierende Ähnlichkeit mit einem herkömmlichen Tennisball und entspricht auch in bezug auf Form und Rückprallelastizität im wesentlichen den entsprechenden Eigenschaften eines herkömmlichen Tennisballs.

**Patentansprüche**

1. Verfahren zur Herstellung von Tennisbällen aus Schaumstoff, dadurch gekennzeichnet, daß aus einem Schaumstoffblock, vorzugsweise aus Kaltschaum, mit einer Raumdichte von mindestens 130 kg/m$^3$, insbesondere 160 kg/m$^3$, eine Kugel in der Größe eines Tennisballs ausgefräst wird, und daß diese Kugel gewalkt wird.

2. Verfahren nach Anspruch 1, dadurch gekennzeichnet, daß die Kugel auf mindestens etwa die Hälfte ihres Durchmessers gewalkt wird.

3. Verfahren nach einem der Ansprüche 1 oder 2, dadurch gekennzeichnet, daß die Kugel durch Abrollen zwischen zwei sich relativ zueinander bewegenden Förderbändern, deren Abstand höchstens etwa der Hälfte des Kugeldurchmessers entspricht, gewalkt wird.

4. Verfahren nach Anspruch 3, dadurch gekennzeichnet, daß die Förderbänder in entgegengesetzter Richtung laufen.

5. Verfahren nach einem der Ansprüche 1 bis 4, dadurch gekennzeichnet, daß zum Ausstanzen der Kugel ein Polyurethan-Schaumstoffblock verwendet wird.

6. Verfahren nach Anspruch 5, dadurch gekennzeichnet, daß Polyurethan auf Polyätherbasis verwendet wird.

7. Verfahren nach Anspruch 5, dadurch gekennzeichnet, daß Polyurethan auf Polyesterbasis verwendet wird.

8. Verfahren nach einem der Ansprüche 1 bis 5, dadurch gekennzeichnet, daß die Oberfläche der ausgefrästen und gewalkten Kugel mit einer in sich geschlossenen Konturlinie versehen wird.

9. Verfahren nach Anspruch 8, dadurch gekennzeichnet, daß die Konturlinie eingebrannt wird.

10. Verfahren nach Anspruch 9, dadurch gekennzeichnet, daß die Kugel zum Einbrennen der Konturlinie an einer geschlossenen, etwa ovalen Drahtschleife entlanggerollt wird.

11. Mit dem Verfahren nach einem der Ansprüche 1 bis 10 hergestellter Tennisball aus Schaumstoff, dadurch gekennzeichnet, daß der Tennisball aus Polyurethan-Schaumstoff auf Polyäther- oder Polyesterbasis mit einer Raumdichte von mindestens 130 kg/m³ besteht und mit einer geschlossenen Konturlinie versehen ist.

## Claims

1. A process for the production of foam tennis balls, characterised in that a ball is shaped in the size of a tennis ball from a block of foam, preferably cold foam, having a density by volume of at least 130 kg/m³, in particular 160 kg/m³, and that this ball is squeezed.

2. A process according to claim 1, characterised in that the ball is squeezed to at least about half its diameter.

3. A process according to one of claims 1 or 2, characterised in that the ball is squeezed by being rolled between two conveyor belts which move relative to each other and the spacing of which corresponds at the most to about half the ball diameter.

4. A process according to claim 3, characterised in that the conveyor belts move in opposite directions.

5. A process according to one of claims 1 to 4, characterised in that the ball is stamped out from a block of polyurethane foam.

6. A process according to claim 5, characterised in that polyurethane of a polyether base is used.

7. A process according to claim 5, characterised in that polyurethane of a polyester base is used.

8. A process according to one of claims 1 to 5, characterised in that the surface of the shaped and squeezed ball ist provided with a contour line which is closed in itself.

9. A process according to claim 8, characterised in that the contour line is branded.

10. A process according to claim 9, characterised in that for branding the contour line, the ball is rolled along a closed, approximately oval loop of wire.

11. A foam tennis ball produced by the process according to one of claims 1 to 10, characterised in that the tennis ball is made of polyurethane foam of a polyether or polyester base, having a density by volume of at least 130 kg/m³, and is provided with a closed contour line.

## Revendications

1. Procédé de fabrication de balles de tennis en mousse, caractérisé en ce qu'il consiste à tailler une sphère à la dimension d'une balle de tennis dans un bloc de mousse, de préférence de mousse à froid, ayant une masse volumique d'au moins 130 kg/m³, notamment de 160 kg/m³, et à comprimer cette sphère.

2. Procédé suivant la revendication 1, caractérisé en ce qu'il consiste à comprimer la sphère jusqu'à au moins la moitié environ de son diamètre.

3. Procédé suivant l'une des revendications 1 ou 2, caractérisé en ce qu'il consiste à comprimer la sphère en la faisant rouler entre deux bandes transporteuses, mobiles relativement l'une à l'autre et dont l'écartement correspond au plus à environ la moitié du diamètre de la sphère.

4. Procédé suivant la revendication 3, caractérisé en ce que les bandes transporteuse se déplacent en sens opposé.

5. Procédé suivant l'une des revendications 1 à 4, caractérisé en ce qu'il consiste à utiliser un bloc de mousse en polyuréthane pour tailler la sphère.

6. Procédé suivant la revendication 5, caractérisé en ce qu'il consiste à utiliser du polyuréthane à base de polyéther.

7. Procédé suivant la revendication 5, caractérisé en ce qu'il consiste à utiliser du polyuréthane à base de polyester.

8. Procédé suivant l'une des revendications 1 à 5, caractérisé en ce qu'il consiste à munir la surface de la sphère taillée et comprimée d'une ligne de contour fermée sur elle-même.

9. Procédé suivant la revendication 8, caractérisé en ce qu'il consiste à ménager la ligne de contour par brûlage.

10. Procédé suivant la revendication 9, caractérisé en ce qu'il consiste, pour ménager la ligne de contour par brûlage, à faire rouler la sphère le long d'une boucle de fil métallique fermée à peu près ovale.

11. Balle de tennis en mousse fabriquée par le procédé suivant l'une des revendications 1 à 10, caractérisée en ce que la belle de tennis est en mousse de polyuréthane à base de polyéther ou de polyester ayant une masse volumique d'au moins 130 kg/m³ et est munie d'une ligne de contour fermée sur elle-même.

## FIG.1

## FIG.2

$V_1$

$V_3$

$V_2$

## FIG.3